Europäisches Patentamt

(19) European Patent Office (11) Publication number: **0 140 145**

Office européen des brevets **B1**

(12) **EUROPEAN PATENT SPECIFICATION**

(45) Date of publication of patent specification: **04.03.87** (51) Int. Cl.⁴: **B 27 B 5/26**

(21) Application number: **84111273.3**

(22) Date of filing: **21.09.84**

(54) **Indexing arrangement for the table of a chop saw.**

(30) Priority: **27.09.83 DE 8327663 u**

(43) Date of publication of application:
**08.05.85 Bulletin 85/19**

(45) Publication of the grant of the patent:
**04.03.87 Bulletin 87/10**

(84) Designated Contracting States:
**BE DE FR GB**

(56) References cited:
**AU-B- 445 065**
**GB-A-1 547 438**
**US-A-3 623 516**
**US-A-3 946 631**

(73) Proprietor: **Black & Decker Inc.**
**Drummond Plaza Office Park 1423 Kirkwood Highway**
**Newark Delaware 19711 (US)**

(72) Inventor: **Grossmann, Horst**
**Fliederweg 10**
**D-6257 Hünfelden 1 (DE)**
Inventor: **Herting, Rainer**
**Einhausstrasse 17**
**D-5439 Langenhahn (DE)**
Inventor: **Kaiser, Horst**
**Gräbengasse 11**
**D-6254 Elz (DE)**

(74) Representative: **UEXKÜLL & STOLBERG**
**Patentanwälte**
**Beselerstrasse 4**
**D-2000 Hamburg 52 (DE)**

## Description

Field of the Invention

This invention relates to chop saws having a saw unit pivotally mounted on a rotatable turntable. The invention particularly relates to indexing arrangements for indexing relative rotational positions of the turntable.

Background of the Invention

Indexing or catch mechanisms in chop saws serve to determine miter adjustments of the saw blade for prescribed miter angles, so that the adjustment of these miter angles is simplified. For this purpose, it is known to employ in a chop saw a ball-spring arrangement, wherein the spring and the ball are inserted into a bore in the surface of a base plate, on which the turntable is rotatably mounted, adjacent the circumferential surface of the turntable. The spring presses the ball against the outer circumferential surface of the turntable. Cavities are present in this circumferential surface and into which the ball can engage, so as to effect indexing of the turntable relative to the base plate.

This arrangement is comparatively complicated to manufacture, because it not only requires the construction of recesses in the external circumferential surface of the turntable, but also the production of a bore in the base plate to accommodate the spring and ball. Also, it involves a comparatively complicated assembly step whereby the spring and ball have to be inserted into this bore, and the turntable then assembled to the base plate in a manner to prevent the ball from coming out of the bore. Furthermore, the catch positions obtainable are not always stable, so that in use a misadjustment can easily occur.

Summary of the Invention

It is an object of the present invention to provide a chop saw with an indexing mechanism of simple construction and relatively simple to assemble during manufacture.

A feature by which this object is achieved is by providing catch recesses on the underside of the turntable along an arc, and releasably engaging these recesses by a resilient arm mounted on the base plate.

Accordingly, therefore, there is provided by the present invention a chop saw comprising a saw unit connected pivotally about a horizontal axis to a turntable mounted rotatably in a base plate about a vertical axis, and an indexing mechanism for releasably indexing the turntable in selected positions relative to the base plate. The indexing mechanism comprises catch recesses provided on the underside of the turntable along a circular arc, the center of the arc lying on the vertical axis; a leaf spring mounted on the base plate and having a free end which is engageable with any selected one of the catch recesses upon rotation of the turntable; and a release element mounted in the base plate and accessible from the exterior thereof, and operable to flex the leaf spring to move the free end out of engagment with any catch recess engaged thereby.

Advantageously, the leaf spring and the base plate may be integral and may be produced in one operation such as molding or casting.

Furthermore, the catch recesses on the underside of the turntable may be constructed simultaneously with the production of the turntable. For example, if the turntable is produced by the pressure casting process from aluminum, then the catch recesses may be constructed during the pressure casting, without a particular or additional operation being necessary for that purpose.

A catch pin is preferably mounted at the free end of the leaf spring for engagement in the catch recessess. Preferably the catch pin is made of metal so that the abrasion resulting from movement thereof from one catch recess to another is minimal.

Preferably the release element is elongate and reciprocally slidable in spaced apart apertures in the base plate, and may have a forked end engaging around the catch pin.

The present invention will become more fully apparent from the following detailed description of a preferred embodiment.

Brief Description of the Drawings

In the accompanying drawings:

FIG. 1 shows a perspective view of a chop saw embodying the present invention;

FIG. 2 shows a partial plan view of the base plate and the turntable of the chop saw of Fig. 1, a region of the turntable being shown fragmented with some exposed parts of the turntable in section; and

FIG. 3 shows partly an elevation and partly a section along the staggered line III—III of Fig. 2.

Detailed Description of the Preferred Embodiment

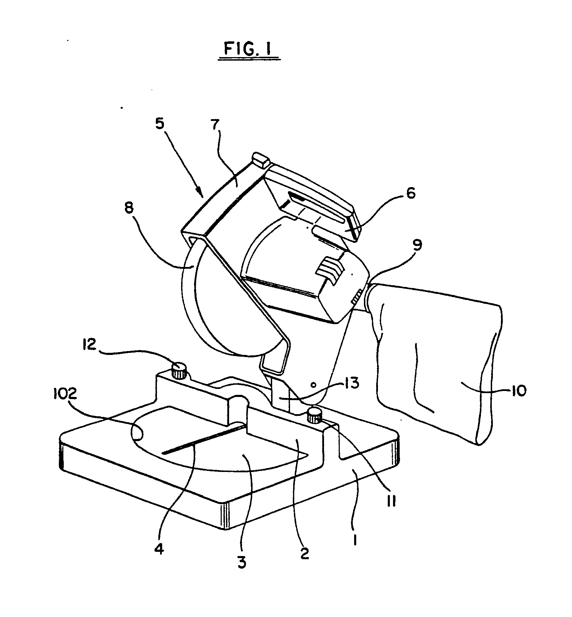

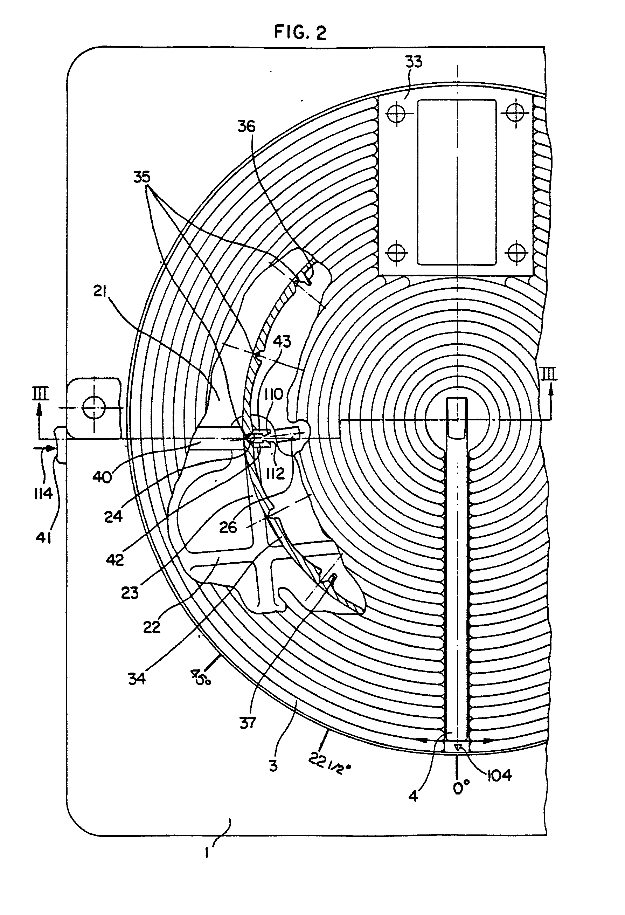

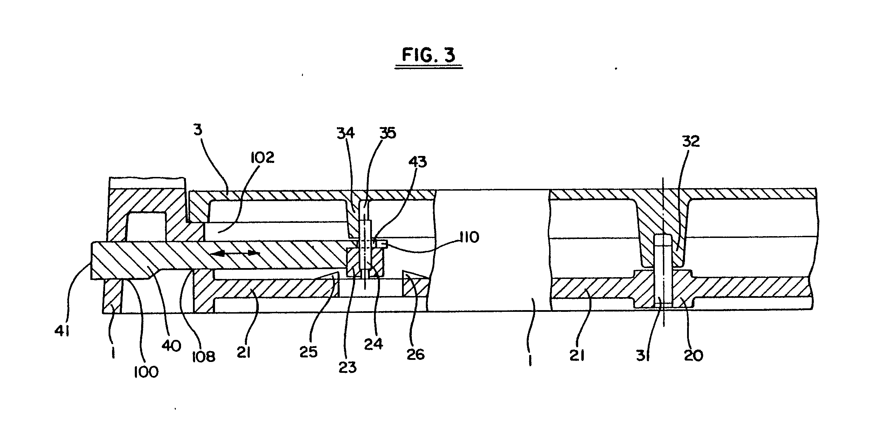

The chop saw illustrated in Fig. 1 has a base plate 1 with a central circular recess 102 across which a stop 2 extends and is constructed integrally with the base plate 1. A stub shaft 31 (see Fig. 3) is supported in a central hub 20 of the base plate 1. The upper end of the shaft 31 is engaged in a central hub 32 extending downwardly from a turntable 3, the hub 32 being rotatable on the shaft 31 whereby the turntable 3 is rotatably mounted in the central recess of the base plate 1. A mounting block 13, on which a saw unit 5 is pivotally mounted, is secured to the turntable on a mounting pad 33 (see Fig. 2). The saw unit has a housing 7 accommodating an electric drive motor for the rotation of a circular saw blade, not shown, and also has a handle 6. A sawdust collecting bag 10 is mounted on an outlet pipe connector 9 provided on one side of the housing 7. In the raised rest position illustrated in Fig. 1, the saw blade is covered by a blade guard 8, which is automatically pivoted relative to the housing when the saw unit 5 is pivoted about the block 13 downwards into the work position, so that the rotating saw blade is exposed and can be brought into cutting engagement with a workpiece present on the turntable 3 and generally abutting the stop 2. To permit the saw unit 5 to be lowered completely, and workpieces to be parted by means of the saw blade, a slot 4 is formed in the turntable 3 and into which slot the rotating saw blade can penetrate.

In order to anchor the turntable 3, and hence the saw unit 5, in a predetermined angular position relative to the stop 2, rotatable clamping members 11 and 12 pass through vertical bores in the stop 2 and can be brought into clamping engagement with the top surface of the turntable 3 adjacent the periphery thereof.

As can be seen from Figs. 2 and 3, the base plate 1 has a bottom wall 21, forming the bottom of the central recess 102, on which an upwardly extending rib 22 is integrally formed. A flexible arm 23, functioning as a leaf spring, extends in cantilever manner from one side of this rib and is formed integrally with the rib 22. A catch pin 24 made of metal is firmly inserted vertically into the distal end region of the cantilevered leaf spring 23. This catch pin 24 extends from the free end of the leaf spring 23 upwards towards the turntable 3.

An annular rib 34 arranged concentrially relative to the bolt 31, and extending downwards towards the bottom wall 21 of the base plate 1, is integrally formed on the underside of the turntable 3 and helps reinforce the latter. Catch recesses 35, which are provided radially on the inside of this annular rib 34, are formed during the production of the turntable 3 and annular rib 34. To this end, the turntable 3 can be manufactured as an alloy casting, although it could be molded from suitable plastic material. The catch recesses 35 are located at prescribed angular intervals along the rib 34, and the different angles are marked on the base plate 1 (see Fig. 2). Limit stops 36 and 37, respectively, are formed on the circumferential outer sides of the two extreme catch recesses 35, which are spaced apart 90°, so that the turntable 3 can be rotated through a maximum of ±45° out of the central position shown in Fig. 2. An indicating mark 104 on the turn table 3 at the outer end of the slot 4 cooperates with the angular markings on the base plate 1.

The leaf spring 23 is oriented substantially along a tangent to the annular rib 34, and the catch pin 24 may, as Fig. 2 shows, be brought into engagement with a catch recess 35. In order to prevent excessive pivoting or flexing of the leaf spring 23, stops 25, 26 formed on the top surface of the bottom wall 21 of the base plate 1 limit the deflexion of the leaf srping 23 in a plane parallel to the surface of the turntable 3.

An elongate push rod 40, serving as a release element, the handle end 41 of which extends outside the base plate 1, is guided through two spaced apart orifices 100, 108 in the base plate 1. The inner end of the push rod 40, opposite the handle end 41, is bifurcate and the two fork prongs 42, 43 have inwardly directed retaining projections 110, 112 on their facing sides, the space between these projections being smaller than the diameter of the catch pin 24. The fork prongs 42, 43 are slid over the catch pin 24, so that the fork is widened resiliently and the catch pin 24 passed into the region between the projections 110, 112 and the fork bottom, and is releasably retained therein by teh pair of projections 110, 112 (see Fig. 2).

When the turntable 3 is in the position shown in Fig. 2, that is to say in a position in which the slot 4 is oriented at right angles to the contact surface of the stop 2, the catch pin 24 is resiliently urged by the leaf spring 23 into the bottom of the corresponding catch recess, as shown in Figs. 2 and 3. In order to obtain a different miter position of the turntable 3, the clamping members 11 and 12 are released and the push rod 40 is displaced in the direction of the arrow 114 in Fig. 2, so that the catch bolt 24 moves out of the catch recess 35 and the spring 23 is then correspondingly resiliently deformed. The turntable 3 can now be rotated freely about the bolt 31, whereby the catch pin 24 moves out of the region of the catch recess. The user can then release the push rod 40, so that the leaf spring 23 presses the catch pin 24 against the inside of the annular rib 34, but a further rotation of the turntable 3 is not obstructed. Upon further rotation of the turntable 3, the catch pin 24 comes into engagement with the next catch recess 35 and is pressed into the bottom thereof by the spring 33.

In this position the turntable 3 is retained by the catch pin 24, and may be clamped in the selected postion by means of the clamping members 11, 12 to further securely lock the turntable in place. As will be appreciated, clamping bolts 11, 12 can clamp the turntable 3 in any rotational position, apart from those rotational positions determined by the catch recesses 35.

The base plate 1 is preferably molded from a suitable plastic material, for example foam plastic. Although the rib 22 and leaf spring 23 are integrally molded with the base plate, the leaf spring is spaced a slight distance above the bottom wall 21, as can be seen in Fig. 3, to enable the leaf srping to flex in cantilever manner over, but parallel to, the bottom wall 21.

As will be apparent, the recesses 35 lie along an arc concentric with the central axis about which the turntable 3 is rotatable; and the catch pin 24 extends parallel to this central axis and is also perpendicular to the leaf spring 23 and the release element 40.

It will be appreciated that the preferred embodiment of the indexing arrangement described above has one portion, the rib 34, formed integrally with the turntable, and another portion, the spring 23, formed integrally with the base plate. Only a third, non-critical portion, the push rod 40, and the catch pin 24, are separately formed and assembled. Thus, this indexing arrangement is simple and inexpensive to manufacture, yet is accurate and reliable in operation.

The above described embodiments, of course, are not to be construed as limiting the breadth of the present invention. Modifications, and other alternative constructions, will be apparent which are within the scope of the invention as defined in the appended claims.

## Claims

1. A chop saw, comprising a saw unit (5) connected pivotally about a horizontal axis to a turntable (3) mounted rotatably in a base plate (1) about a vertical axis, and an indexing mechanism (23, 35, 40) for releasably indexing the turntable (3) in selected positions relative to the base plate (1), characterized by said indexing mechanism comprising:

(a) catch recesses (35) provided on the underside of said turntable (3) along a circular arc (34), the centre of said arc lying on said vertical axis;

(b) a leaf spring (23) mounted on said base plate (1) and having a free end (24) which is engageable with any selected one of said catch recesses (35) upon rotation of said turntable (3); and

(c) a release element (40) mounted in said base plate (1) and accessible from the exterior thereof, and operable to flex said leaf spring (23) to move said free end (24) out of engagement with any catch recess (35) engaged thereby.

2. The chop saw of Claim 1, characterized in that said base plate (1) and said leaf spring (23) are integrally molded from plastic material.

3. The chop saw of Claim 1 or 2, characterized in that said free end of said leaf spring (23) comprises a catch pin (24) orientated at right angles to the longitudinal extent of said leaf spring (23), said catch pin (24) being engageable with said recesses (35).

4. The chop saw of Claim 3, characterized in that said release element (40) has a bifurcated end (42, 43) in engagement with said catch pin (24), said release element (40) being movable reciprocally substantially at right angles to both the longitudinal extent of said leaf spring (23) and said catch pin (24).

5. The chop saw of any preceding claim, characterized in that said catch recesses (35) are formed in a side face of an annular rib (34) formed on and extending downwardly from said turntable (3).

6. The chop saw of any preceding claim, characterized in that said leaf spring (23) extends substantially along a tangent to said circular arc (34).

7. The chop saw of any preceding claim, characterized by stops (25, 26) mounted on said base plate (1) to limit flexing movement of said leaf spring (23).

8. The chop saw of any preceding claim, characterized in that stops (36, 37) are provided at the circumferentially outer sides of end catch recesses (35) on said circular arc (34), these stops (36, 37) limiting rotation of said turntable (3) relative to said base plate (1).

9. The chop saw of Claim 8, characterized in that said end catch recesses (35) are spaced apart 90 degrees about said vertical axis.

10. The chop saw of any preceding claim, characterized in that said release element (40) is elongate and slidably mounted in orifices (100, 108) in said base plate (1), one end (41) of said release element (40) extending outside said base plate (1) for manual actuation thereof, and the other end of said release element being forked (42, 43) and engaging around said free end (24).

11. The chop saw as claimed in any preceding claim, characterized by clamping means (11, 12) for clamping said turntable (3) in any rotational position thereof including any position located by engagement of said free end (24) of said leaf spring (23) in any one of said catch recesses (35).

12. The chop saw of any preceding claim, characterized in that said catch recesses (35) are formed integrally with said turntable (3).

## Patentansprüche

1. Kappsäge mit einer Sägeeinheit (5), die um eine horizontale Achse schwenkbar an einem Drehtisch (3) befestigt ist, der um eine vertikale Achse drehbar in einer Grundplatte (1) befestigt ist, und mit einer Teilungseinrichtung (23, 35) 40) zum lösbaren Einrasten des Drehtisches (3) in gewählten Stellungen bezüglich der Grundplatte (1), dadurch gekennzeichnet, daß die Teilungseinrichtung enthält:

(a) an der Unterseite des Drehtisches (3) entlang eines Kreisbogens (34), dessen Mitte auf der vertikalen Achse liegt, vorgesehene Rastvertiefungen (35);

(b) eine Blattfeder (23), die an der Grundplatte (1) befestigt ist und ein freies Ende (24) aufweist, das bei Drehung des Drehtisches (3) in Eingriff mit irgendeiner ausgewählten Rastvertiefung (35) bringbar ist; und

(c) ein Löseelement (40), das an der Grundplatte (1) befestigt und von deren Äußeren zugänglich sowie zum Biegen der Blattfeder (23) betätigbar ist, um deren freies Ende (24) außer Eingriff mit der in Eingriff mit ihn stehenden Rastvertiefung (35) zu bringen.

2. Kappsäge nach Anspruch 1, dadurch gekennzeichnet, daß die Grundplatte (1) und die Blattfeder (23) einstückig aus Kunststoff geformt sind.

3. Kappsäge nach Anspruch 1 oder 2, dadurch gekennzeichnet daß das freie Ende der Blattfeder (23) einen rechtwinklig zur Längserstreckung der Blattfeder (23) angeordneten Rastbolzen (24) aufweist, der in Eingriff mit den Vertifungen (35) bringbar ist.

4. Kappsäge nach Anspruch 3, dadurch gekennzeichnet, daß das Löseelement (40) ein in Eingriff mit dem Rastbolzen (24) stehendes, gegabeltes Ende (42, 43) aufweist und im wesentlichen rechtwinklig zur Längserstreckung sowohl der Blattfeder (23) als auch des Rastbolzens (24) hin- un herbewegbar ist.

5. Kappsäge nach einem der vorhergehenden Ansprüche, dadurch gekennzeichnet, daß die Rastvertiefungen (35) an einer Seitenfläche einer am Drehtisch (3) angeformten, sich von diesem nach unten erstreckenden Ringrippe (34) ausgebildet sind.

6. Kappsäge nach einem der vorhergehenden Ansprüche, dadurch gekennzeichnet, daß sich die Blattfeder (23) im wesentlichen entlang einer Tangente an den Kreisbogen (34) erstreckt.

7. Kappsäge nach einem der vorhergehenden Ansprüche, gekennzeichnet durch an der Grundplatte (1) befestigte Anschläge (25, 26) zur Begrenzung der Schwenkbewegung der Blattfeder (23).

8. Kappsäge nach einem der vorhergehenden Ansprüche, dadurch gekennzeichnet, daß an den in Umfangsrichtung äußeren Seiten der Rastvertiefungen (35) auf dem Kreisbogen (34) Anschläge (36, 37) vorgesehen sind, die die Drehung des Drehtisches (3) bezüglich der Grundplatte (1) begrezen.

9. Kappsäge nach Anspruch 8, dadurch gekennzeichnet, daß die Endrastvertiefungen (35) im Abstand von 90° um die vertikale Achse liegen.

10. Kappsäge nach einem der vorhergehenden Ansprüche, dadurch gekennzeichnet, daß das Löseelement (40) länglich und verschiebbar in einer Öffnung (100, 108) in der Grundplatte (1) befestift ist, wobei sich ein Ende (41) des Löseelementes (50) zur Betätigung von Hand aus der Grundplatte (1) erstreckt und das andere Ende des Löseelementes gegabelt (42, 43) ist und um das freie Ende (24) greift.

11. Kappsäge nach einem der vorhergehenden Ansprüche, gekennzeichnet durch Klemmittel (11, 12) zum Festklemmen des Drehtisches (3) in irgendeiner Drehstellung einschließlich einer Stellung, die durch Eingriff des freien Endes (24) der Blattfeder (23) mit irgendeiner der Rastvertiefungen (35) gegeben ist.

12. Kappsäge nach einem der vorhergehenden Ansprüche, dadurch gekennzeichnet, daß die Rastvertifungen (35) in den Drehtisch (3) eingeformt sind.

**Revendications**

1. Scie à découper comprenant une unité de sciage (5) articulée, pour basculer autour d'un axe horizontal, sur une table tournante (3) qui est montée rotative dans une plaque de base (1) pour tourner autour d'un axe vertical, et un mécanisme d'indexage (23, 35, 40) servant à positionner la table tournante (3) dans des positions angulaires prédéterminées par rapport à la plaque de base (1), caractérisée en ce que ledit mécanisme d'indexage comprend:

a) des crans d'arrêt (35) prévus sur la face inférieure de ladite plaque tournante (3), le long d'un arc de cercle (34), le centre dudit arc se trouvant sur ledit axe verticale;

b) une lame-ressort (23) montée sur ladite plaque de base (1) et possédant une extrémité libre (24) qui peut être mise en prise avec l'un quelconque choisi desdits crans d'arrêt (35) lorsqu'on fait tourner ladite table tournante (3); et

c) un élément de déblocage (40) monté dans ladite plaque de base (1) et accessible par l'extérieur de celle-ci, que l'on peut actionner pour faire fléchir ladite lame-ressor (23) et mettre ladite extrémité libre (24) hors de prise avec le cran d'arrêt quelconque (35) avec lequel elle est en prise.

2. Scie à découper selon la revendication 1, caractérisée en ce que ladite plaque de base (1) et ladite lame-ressort (23) sont moulés d'une seule pièce en matière plastique.

3. Scie à découper selon l'une des revendications 1 et 2, caractérisée en ce que ladite extrémité libre de ladite lame-ressort (23) comprend un doigt d'arrêt (24) orienté perpendiculairement à la direction longitudinale de ladite lame-ressort (23), ledit doigt d'arrêt (24) pouvant être mist en prise avec lesdits crans (35).

4. Scie à découper selon la revendication 3, caractérisée en ce que ledit élément de déblocage (40) présente une extrémité en forme de fourche (42, 43) qui est en prise avec ledit doigt d'arrêt (24), ledit élément de déblocage (40) pouvant se déplacer en translation alternative, sensiblement perpendiculairement à la direction longitudinale de ladite lame-ressort (23) et à celle dudit doigt d'arrêt (24).

5. Scie à découper selon l'une quelconque des revendications précédentes, caractérisée en ce que lesdits crans d'arrêt (35) sont ménagés dans une face latérale d'une nervure annulaire (34) formée sur ladite table tournante (3) et qui fait saillie de cette table vers le base.

6. Scie à découper selon l'une quelconque des revendications précédentes, caractérisée en ce que ladite lame-ressort (23) s'étend sensiblement le long d'une tangente audit arc de cercle (34).

7. Scie à découper selon l'une quelconque des revendications précédents, caractérisée par des butées (25, 26) montées sur ladite plaque de base (1) pour limiter le mouvement de flexion de ladite lame-ressort (23).

8. Scie à découper selon l'une quelconque des revendications précédentes, caractérisée en ce que des butées (36, 37) sont préves sur les côtés circonférentiellement extérieurs des crans d'arrêt (35) extrêmes sur ledit arc ce cercle (34) ces butées (36, 37) limitant la rotation de ladite table tournante (3) par rapport à ladite plaque de base (1).

9. Scie à découper selon la revendication 8, caractérisée en ce que lesdits carns d'arrêt extrêmes (35) sont espacés de 90° autour dudit axe vertical.

10. Scie à découper selon l'une quelconque des revendications précédents, caractéisée en ce que ledit élément de déblocage (40) est allongé, et monté coulissant dans des orifices (100, 108) de ladite plaque de base (1), une extrémité (41) dudit élément de déblocage (40) saillant à l'extérieur de ladite plaque de base (1) pour permettre de l'actionner manuellement, et l'autre extrémité dudit élément de déblocage présentant une forme de fourche (42, 43) et encadrant ladite extrémité libre (24).

11. Scie à découper selon l'une quelconque des revendications précédentes, caractérisée par des moyens de serrage (11, 12) permettant de maintenir ladite table tournante (3) dans une position angulaire quelconque , y compris n'importe quelle position définie par l'engagement de ladite extrémité libre (24) de la lame-ressort (23) dans l'un quelconque desdits crans d'arrêt (35).

12. Scie à découper selon l'une quelconque des revendications précédentes, caractérisée en ce que lesdits crans d'arrêt (35) sont venus d'une seule pièce avec ladite table tournante (3).

## FIG. 1

## FIG. 2

FIG. 3